# EUROPÄISCHE PATENTSCHRIFT

(11) **EP 0 304 814 B1**
(45) Veröffentlichungstag und Bekanntmachung des Hinweises auf die Patenterteilung: **27.10.1993**
(21) Anmeldenummer: 88113487.8
(22) Anmeldetag: 19.08.1988
(51) Int. Cl.: H04J 3/06

(54) **Schaltungsanordnung zur Synchronisation**
Synchronisation circuit
Dispositif de synchronisation

(30) Priorität: 28.08.1987 DE 3728781
(43) Veröffentlichungstag der Anmeldung: 01.03.1989
(73) Patentinhaber: Deutsche Thomson-Brandt GmbH, 78010 Villingen-Schwenningen (DE)
(72) Erfinder: Rottmann, Dieter, Dipl.-Ing., D-3000 Hannover 61 (DE); Laabs, Jürgen, Dipl.-Ing., D-3017 Pattensen (DE)

(56) Entgegenhaltungen:
- GB-A- 1 069 538

## Beschreibung

Die Erfindung betrifft eine Schaltungsanordnung zur Synchronisation eines Datenprozessors mit einem seriellen Datenstrom nach dem Oberbegriff des Anspruchs 1.

Bei der seriellen Übertragung digitaler Signale, die in eine vorgegebene Rahmenstruktur eingeordnet sind, ist es bekannt, für die Datenverarbeitung einen Datenprozessor einzusetzen, der programmgesteuert Berechnung durchführt. Zur Kennzeichnung zusammengehöriger Daten werden Steuersignale übermittelt, die den Datenprozessor vorgegebene Programmschritte ausführen lassen.

Bei hochintegrierten Datenprozessoren werden Einschränkungen bei der Herausführung von Steuerports vorgenommen, um entweder genormte Gehäusegrößen verwenden zu können oder aber die Ausmaße des Gehäuses und die Anzahl der Anschlußpins in Grenzen zu halten.

Der Erfindung liegt die Aufgabe zugrunde, eine Schaltungsanordnung zur Synchronisation eines Datenprozessors so auszubilden, daß unterschiedliche Steuersignale über einen einzigen Steuerport zugeführt werden konnen.

Diese Aufgabe wird bei einer Schaltungsanordnung nach dem Oberbegriff des Anspruchs 1 durch die im kennzeichnenden Teil angegebenen Merkmale gelöst.

Bei der Erfindung werden zunächst unterschiedliche Steuersignale gewonnen, von denen die ersten jeweils eine zusammengehörige Datenfolge kennzeichnen und die zweiten das Auftreten einer mit Sollwerten übereinstimmenden Datenfolge angeben, z.B. ein Synchrondatenwort. Diese getrennten Steuersignale werden dann zusammengeführt und durch eine Verknüpfungsschaltung so verknüpft, daß die zeitliche Länge das Kriterium dafür bildet, welches von beiden Steuersignalen vorliegt. Besonders vorteilhaft ist diese Lösung bei Steuersignalen, von denen das eine seltener aber immer zeitgleich mit dem anderen auftritt.

Weiterbildungen und vorteilhafte Ausführungsformen der Erfindung ergeben sich aus den weiteren Ansprüchen, der Beschreibung und der Zeichnung, die ein Ausführungsbeispiel veranschaulicht.

In der Zeichnung zeigen:
- **Fig. 1**: ein die Erfindung verkörperndes Schaltbild, als Bestandteil eines Empfängers für digitalen Satelliten-Rundfunks,
- **Fig. 2**: ein Impulsdiagramm zur Erläuterung der in Fig. 1 dargestellten Schaltung.

Der Empfänger für digitalen Satelliten-Rundfunk ist dafür vorgesehen, Hörfunkprogramme nach den Spezifikationen des Hörfunkübertragungsverfahrens in TV-Sat zu empfangen. Die Verschachtelung der Programme in eine Rahmenstruktur und die Unterbringung zusätzlicher Programminformationen in Sonderdienst-Rahmen und Sonderdienst-Überrahmen sind in der DE-OS 33 08 025 näher beschrieben.

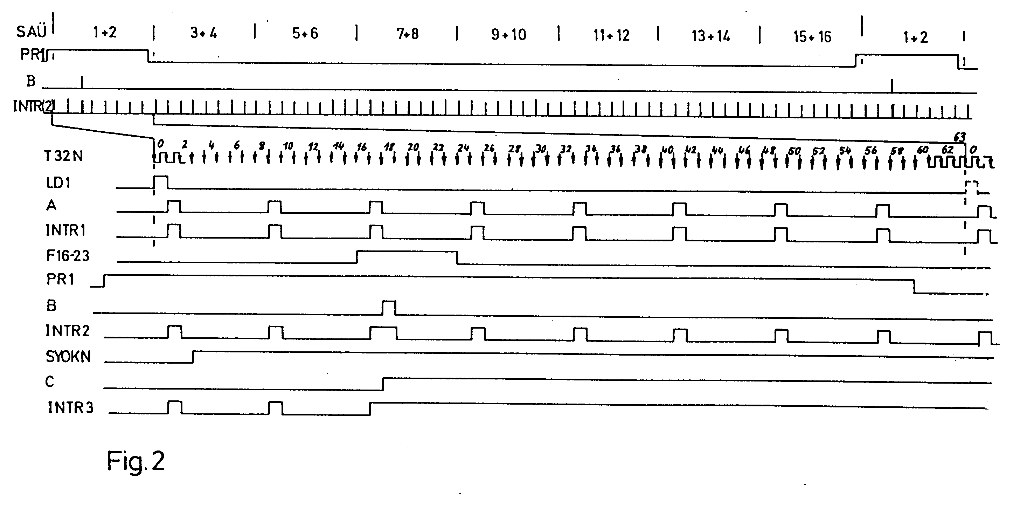

Fig. 2 zeigt im oberen Teil den Sonderdienst-Überrahmen SAÜ, in dem blockweise Informationen über die Programmart jeweils zweier Programme übertragen werden. Der Sonderdienst-Überrahmen SAÜ umfaßt acht Sonderdienst-Rahmen SA von denen jeder aus einem Synchronwort und Programmartinformationen für derzeit zwei Programme, also Programm 1+2, Programm 3+4 ... Programm 15+16 besteht. Der Sonderdienst-Überrahmen SAÜ beginnt mit dem Sonderdienst-Rahmen SA, der nach dem Synchronwort die Programmartinformationen für das Programm 1 und das Programm 2 enthält. Das Synchronwort, das den Neubeginn des Sonderdienst-Überrahmen SAÜ mit dem ersten Sonderdienst-Rahmen SA anzeigt, unterscheidet sich geringfügig in der Bit-Struktur von den Synchronworten die jeweils den zweiten bis achten Sonderdienst-Rahmen SA einleiten.

Die zur Darstellung der Synchronworte und Programmartinformationen verwendeten Bit sind die im Hauptrahmen A nach den o.g. Spezifikationen übertragenen Sonderdienst-Bit. Diese werden von einem Datenprozessor ausgewertet. Der Datenprozessor ist jedoch nicht in der Lage, neben den auszuführenden Berechnungen auch eine Überwachung von im Datenstrom auftretenden Synchronworten durchzuführen. Diese Aufgabe übernimmt eine Auswerteschaltung, die anhand der ausgewerteten Signale entsprechende Steuersignale dem Datenprozessor übermittelt, der dadurch den Anfang bestimmter Datenfolgen erkennt.

Bei den von der Auswerteschaltung abgegebenen Steuersignalen handelt es sich um erste Steuersignale A die das Ende zusammengehörender Datenworte, in diesem Falle solche von 8 Bit Länge, kennzeichnen und um zweite Steuersignale PR1, die den Beginn der Programmartinformationen für das Programm 1 kennzeichnen. Die ersten Steuersignale sollen als INTR1 und die zweiten als INTR2 zu Datenprozessor gelangen. Ein zusätzliches Steuersignal INTR3 soll dann den Datenprozessor erreichen, wenn die Auswerteschaltung keine Synchronsignale SYOKN erkennen kann.

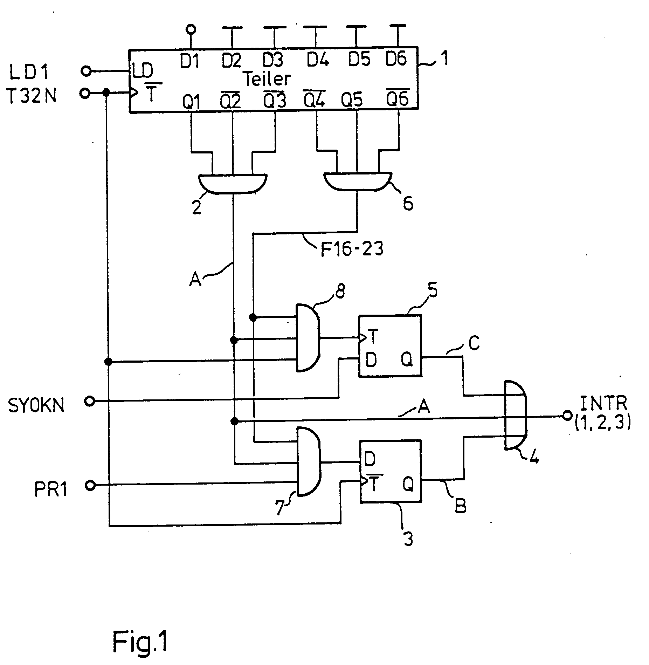

Die in Fig. 1 dargestellte Schaltung ist in der Lage, diese drei von der Auswerteschaltung abgegebenen Steuersignale zusammenzufassen, so daß sie als in der Pulslänge unterschiedlich veränderte Signale über eine einzige Steuerleitung zum Datenprozessor geführt werden können.

Zur Erläuterung wird der Zeitabschnitt betrachtet, in der die Informationen der Programmart für das Programm 1 übertragen werden. Der diesen Zeitabschnitt enthaltende Sonderdienst-Rahmen ist deshalb in Fig. 2 unten gedehnt gezeichnet. Zum Datentransport dient ein aus der Folge der Sonderdienst-Bit im Datenstrom abgeleiteter Takt T32N mit einer Frequenz von 32 kHz. Dieser Takt wird auf einen Teiler 1 geführt, der eine Frequenzteilung im Verhältnis zwischen 2¹ und 2⁶ durchführen kann. Der Teiler 1 wird zu Beginn eines zusammengehörenden Datenwortes durch Auswertung eines SA-Synchronwortes zunächst auf einen definierten Zustand gesetzt, indem er durch einen Ladebefehl LD1 mit dem Wert 1 geladen wird. Durch logische Verknüpfung der ersten drei Stellen Q1,Q̅2̅, Q̅3̅ des Teilers 4 mittels eines Verknüpfungsgliedes 2 wird nun mit jedem achten Takt T32N ein Signal A erzeugt, das über ein Verknüpfungsglied 4 als INTR1 zu einem Steuereingang des Datenprozessors gelangt.

Um über die gleiche Steuerleitung auch eine Information über den Beginn der Programmartinformation von Programm 1 zu übermitteln, die in einem Steuersignal PR1 enthalten sind, werden durch den Teiler 1 zusammen mit einem Verknüpfungsglied 6 die letzten 3 Stellen auf die Takte 16 - 23 hin überwacht. Diese Takte sind deshalb ausgewählt, damit ein Hilfssignal erzeugt werden kann, das vor einem INTR1 beginnt und nach diesem, aber vor einem weiteren INTR1 endet. Der Signalverlauf ist als F16-23 dargestellt. Durch Unverknüpfung des Signals F16-23 sowohl mit dem Signal TR1 als auch mit dem Signal A in einem Verknüpfungsglied 7 und Verzögerung dieses Signals in einem Flip-Flop 3 wird ein Signal B gewonnen, das um eine Taktperiode dem Signal A nacheilt. Durch Verknüpfung des Signals B mit dem Signal A in einem Verknüpfungsglied 4 erscheint ein Signal INTR2, das die doppelte Pulslänge wie das Signal INTR1 umfaßt. Dieses Signal wird vom Datenprozessor derart verarbeitet, daß er zunächst durch IRTN1 veranlaßt wird, Daten zu übernehmen und nach der Übernahme der Daten die durch INTR2 erhaltene Information ergänzt, daß es sich hierbei um Daten für das Programm 1 handelt.

Schließlich ist noch der Fall dargestellt, daß kein Synchronsignal empfangen wird. Dies geschieht durch SYOKN, das durch den Zustand logisch H fehlende Synchronisation anzeigt und zum Eingang eines als Verzögerungsglied dienenden Flip-Flop 5 gelangt. Ein durch Verknüpfung des Taktes T32N sowie F16 - 23 und A mittels eines Verknüpfungsgliedes 8 gebildetes Taktsignal liegt am Takteingang des Flip-Flop 5 an. An dessen Ausgang erscheint das Signal C. Durch Verknüpfung mit den übrigen Signalen A und B entsteht hinter dem Verknüpfungsglied 4 ein Signal INTR3, das statisch auf logisch H liegt und z.B. den Datenprozessor für weitere Datenverarbeitung sperrt.

## Patentansprüche

1. Schaltungsanordnung zur Synchronisation eines Datenprozessors mit einem seriellen Datenstrom, **dadurch gekennzeichnet,** daß eine Auswerteschaltung (1,2) für eine im Datenstrom enthaltene zusammengehörige Datenfolge vorgesehen ist, die erste periodische Steuersignale (A) liefert, daß eine Vergleichsschaltung vorgesehen ist, die Datenfolgen mit einer vorgegebenen Sollwertfolge vergleicht und einer Speicherschaltung (3) zuführt, die zeitlich gegenüber den ersten Steuersignalen verschobene zweite periodische Steuersignale (A) liefert, und daß die ersten und zweiten Steuersignale (A,B) dem Datenprozessor über eine Verknüpfungsschaltung (4) als Steuersignale (INTR1 INTR2) zugeführt sind.

2. Schaltungsanordnung nach Anspruch 1, **dadurch gekennzeichnet,** daß die Speicherschaltung (3) ein Flip-Flop ist, welches die zweiten Steuersignale (B) um die Pulsdauer der ersten (A) verschiebt.

3. Schaltungsanordnung nach Anspruch 1 oder 2, **dadurch gekennzeichnet,** daß die Verknüpfungsschaltung (4) eine ODER-Schaltung ist.

4. Schaltungsanordnung nach einem oder mehreren der Ansprüche 1 bis 3, dadurch gekennzeichnet, daß die ersten periodischen Steuersignale (A) durch Taktsignale T32N gewonnen werden, die einem Frequenzteiler (1) zugeführt werden, dessen Teilerverhältnis der Anzahl der in einem Datenwort zusammengehörenden Bits entspricht.

5. Schaltungsanordnung nach Anspruch 4, wobei die Datenfolge in eine wenigstens zweistufige Rahmenstruktur eingegliedert ist, **dadurch gekennzeichnet,** daß auch die zweiten periodischen Steuersignale (B) durch Taktsignale T32N gewonnen werden, die einem Frequenzteiler (1) zugeführt werden, dessen Teilerverhältnis der Anzahl der in einem Rahmen SA enthaltenen zusammengehörenden Datenworte entspricht und daß Ausgangssignale (F16-23) des Teilers (1) mit den zweiten Steuersignalen (PR1) verknüpft sind.

6. Schaltungsanordnung nach einem oder mehreren der Ansprüche 1 bis 4, **dadurch gekennzeicnet**, daß eine weitere Vergleichsschaltung vorgesehen ist, die Datenfolgen mit einer vorgegebenen Sollwertfolge vergleicht und dritte statische Steuersignale (SYOKN) liefert, und daß die dritten Steuersignale (SYOKN) nach Verzögerung durch ein Verzögerungsglied (5) als Steuersignale (C) mit den ersten (A) und zweiten Steuersignalen (B) über die Verknüpfungsschaltung (4) verknüpft werden und dem Datenprozessor als (INTR3) zugeführt sind.

## Claims

1. Circuit arrangement for the synchronisation of a data processor utilising a serial data stream, characterised in that, there is provided an evaluating circuit (1, 2) for an appertaining data sequence contained in the data stream which delivers first periodic control signals (A), that a comparison circuit is provided which compares data sequences with a predetermined reference value sequence and supplies them to a storage circuit (3) which delivers second periodic control signals (A) that are displaced in time relative to the first control signals and that the first and second control signals (A, B) are supplied to the data processor via a gating circuit (4) as control signals (INTR1, INTR2).

2. Circuit arrangement in accordance with Claim 1, characterised in that, the storage circuit (3) is a flip-flop which displaces the second control signals (B) by the pulse duration of the first (A).

3. Circuit arrangement in accordance with Claim 1 or 2, characterised in that, the gating circuit (4) is an OR circuit.

4. Circuit arrangement in accordance with one or more of the Claims 1 to 3, characterised in that, the first periodic control signals (A) are obtained from clock signals T32N which are supplied to a frequency divider (1) whose division ratio corresponds to the number of the bits contained in a data word.

5. Circuit arrangement in accordance with Claim 4, wherein the data sequence is incorporated into an at least two stage frame structure, characterised in that, the second periodic control signals (B) are also obtained from clock signals T32N which are supplied to a frequency divider (1) whose division ratio corresponds to the number of the appertaining data words contained in a frame SA and that output signals (F16 - 23) of the divider (1) are logically combined with the second control signals (PR1).

6. Circuit arrangement in accordance with one or more of the Claims 1 to 4, characterised in that, there is provided a further comparison circuit which compares data sequences with a predetermined reference value sequence and delivers third static control signals (SYOKN) and that, after delay by means of a delay member (5), the third control signals (SYOKN) are logically combined as control signals (C) with the first (A) and second control signals (B) via the gating circuit (4) and are supplied to the data processor as (INTR3).

## Revendications

1. Dispositif de circuit pour la synchronisation d'un processeur de données avec un flux de données sériel, **caractérisé en ce** qu'un circuit d'exploitation (1, 2), qui est prévu pour une séquence de données qui vont ensemble qui sont contenues dans le flux de données, donne les premiers signaux de commande périodiques (A), qu'il est prévu un circuit comparateur qui compare les séquences de données à une séquence de valeurs de consigne prédéterminée et qui les amène à un circuit de mise en mémoire (3) qui donne des seconds signaux de commande périodiques (B) décalés dans le temps par rapport aux premiers signaux de commande et que les premiers et les seconds signaux de commande (A, B) sont amenés au processeur de données comme signaux de commande (INTR1, INTR2) par l'intermédiaire d'un circuit d'enchaînement (4).

2. Dispositif de circuit selon la revendication 1, **caractérisé en ce** que le circuit de mise en mémoire (3) est un flip-flop qui décale les seconds signaux de commande (B) de la longueur d'impulsion des premiers (A).

3. Dispositif de circuit selon la revendication 1 ou 2, **caractérisé en ce** que le circuit d'enchaînement (4) est un circuit OU.

4. Dispositif de circuit selon l'une ou plusieurs des revendications 1 à 3, **caractérisé en ce** que les premiers signaux de commande périodiques (A) sont obtenus par des signaux d'horloge T32N qui sont amenés à un diviseur de fréquence (1) dont le rapport de division correspond au nombre des bits qui font partie ensemble d'un mot de données.

5. Dispositif de circuit selon la revendication 4, la séquence de données étant intégrée à au moins une structure de cadre biétagée, **caractérisé en ce** que les seconds signaux de commande périodiques (B) sont également obtenus par des signaux d'horloge T32N qui sont amenées à un diviseur de fréquence (1) dont le rapport de division correspond au nombre des mots de données qui vont ensemble et qui sont contenus dans un cadre SA et que les signaux de sortie (F16-23) du diviseur (1) sont enchaînés aux seconds signaux de commande (PR1).

6. Dispositif de circuit selon l'une ou plusieurs des revendications 1 à 4, **caractérisé en ce** qu'il est prévu un autre circuit comparateur qui compare les séquences de données à une séquence de valeurs de consigne prédéterminée et qui donne des troisièmes signaux de commande statiques (SYOKN) et que les troisièmes signaux de commande (SYOKN) sont enchaînés, après retard par un élément de retard (5), comme signaux de commande (C) aux premiers (A) et aux seconds signaux de commande (B) par le circuit d'enchaînement (4) et sont amenés au processeur de données comme (INTR3).
